# EUROPÄISCHE PATENTANMELDUNG

(11) **EP 1 074 804 A2**
(43) Veröffentlichungstag der Anmeldung: **07.02.2001**
(21) Anmeldenummer: 00116040.7
(22) Anmeldetag: 26.07.2000
(51) Int. Cl.: F25D 23/08, F25D 23/02, E06B 7/23

(54) **Wärmeisolierende Tür für ein Kältegerät oder ein Gefrierfach**

(30) Priorität: 03.08.1999 DE 19936419
(71) Anmelder: BSH Bosch und Siemens Hausgeräte GmbH, 81669 München (DE)
(72) Erfinder: Strobel, Manfred, 89129 Langenau (DE); Lang, Werner, 89428 Syrgenstein (DE); Stickel, Harald, 89522 Heidenheim (DE)

(57) **Zusammenfassung**

Bei einer wärmeisolierenden Tür (10,30,40,55) für ein Kältegerät oder ein Gefrierfach oder dergleichen, mit einer Außenverkleidung (11,31,41,56), einer wärmeisolierenden Zwischenschicht (21,37,49,67) und einer Innenverkleidung (12,32,42,57), an deren Rand eine Türdichtung (17,36,46,61) vorgesehen ist, sind die Türdichtung (17,36,46,61) und die Innenverkleidung (12,32,42,57) im Zweikomponenten-Spritzgußverfahren erzeugt, wobei die Türdichtung (17,36,46,61) aus einem deren elastische Verformung ermöglichenden Werkstoff gefertigt ist.

## Beschreibung

Die Erfindung betrifft eine wärmeisolierende Tür für ein Kältegerät oder ein Gefrierfach oder dergleichen mit einer Außenverkleidung, einer wärmeisolierenden Zwischenschicht und einer Innenverkleidung, an deren Rand eine Türdichtung vorgesehen ist.

Bei Gefrierfachtüren zum Verschließen von sogenannten Drei- bzw. Viersterne-Gefrierfächern ist es bekannt, an deren als Innentüre bezeichneten Innenverkleidung in Randnähe dieser Innenverkleidung eine Türdichtung vorzusehen, welche als vorgefertigtes Profil ausgebildet und im Schließzustand der Tür dicht am Öffnungsrand des Gefrierfachgehäuses aufliegt. Zum Zwecke ihrer Befestigung an der Gefrierfachtür sind die bekannten, vorgefertigten Türdichtungen mit einem Dichtungsfuß ausgestattet, welcher beispielsweise in eine Haltenut einzugreifen vermögende hakenartige Vorsprünge oder eine Aufnahmenut aufweist, welche mit einem vorspringenden Abschnitt am umlaufenden Rand an der Innenverkleidung zusammenwirkt. In beiden Fällen erfordert die Befestigung des vorgefertigten Dichtungsprofiles am Türkorpus der Gefrierfachtür einen nicht unerheblichen Zeitaufwand, wodurch insbesondere erhebliche Fertigungskosten in einer bei Haushaltskältegeräten üblichen Großserien-Anfertigung resultieren. Darüber hinaus ist der Herstellaufwand der aus einzelnen, extrudierten Profilabschnitten zusammengefügten und zum Zwecke des Zusammenfügens mit Gehrungsschnitten versehenen Profilabschnitte, welche den dann zur Erzeugung des Dichtungsprofiles an den Gehrungsschnitten zu verschweißen sind, erheblich, so daß einerseits das Dichtungsprofil als solches, aber auch dessen Befestigung am Türkorpus der Gefrierfachtür erheblich zu den Herstellkosten dieser Tür beiträgt. Außerdem bringen die bekannten Befestigungsmaßnahmen des Dichtungsprofiles am Gefrierfachtürkorpus mit sich, daß beide Bauteile, um einen reibungslosen Fertigungsablauf zu gewährleisten, jeweils in ausreichender Stückzahl der Türenfertigungsstraße zuzuführen sind, wodurch unter Umständen zur Gewährleistung der erforderlichen Stückzahl Zwischenlager erforderlich sind.

Der Erfindung liegt die Aufgabe zugrunde, für eine wärmeisolierende Tür gemaß dem Oberbegriff des Anspruches 1 eine die Nachteile des Standes der Technik vermeidende, einfache Befestigung einer Türdichtung vorzuschlagen.

Diese Aufgabe wird gemäß der Erfindung dadurch gelöst, daß die Türdichtung und die Innenverkleidung im Zweikomponenten-Kunststoff-Spritzgußverfahren erzeugt sind, wobei die Türdichtung aus einem deren elastische Verformung ermöglichenden Werkstoff gefertigt ist.

Durch das erfindungsgemäße Mitanformen der Türdichtung im ZweikomponentenKunststoff-Spntzgußverfahren an die Innenverkleidung einer Kältegerätetür oder einer Gefrierfachtür entfällt die vielfach zeitraubende und unter Umständen sogar mit erheblichen Kraftaufwand verbundene Montage der Türdichtung durch das Fertigungspersonal. Dies hat wiederum zur Folge, daß der Fertigungsablauf einer Kältegeräte- oder Gefrierfachtür deutlich rascher und somit kostengünstiger durchführbar ist und außerdem die bestimmungsgemäße Funktion der Türdichtung nicht von der Arbeitssorgfalt des Fertigungspersonals abhängt, da die Türdichtung stets positionsgenau an der Innenverkleidung festgesetzt ist, so daß letztere im Hinblick auf Ihre Funktion stets einen hohen Qualitätsstand aufweist. Dies ist deshalb möglich, weil sowohl die Innenverkleidung als auch die Türdichtung in einem Spritzwerkzeug gleichzeitig erzeugt werden, wobei nach der Herstellung der Innentüre mit einem ersten Kunststoff ein zweiter, gegenüber diesem weicherer, eine geringere Shorehärte aufweisenden Kunststoff an diese Innentüre mitangespritzt wird. Durch diese Fertigungsmethode ergibt sich außerdem eine nicht unerhebliche Materialeinsparung im Hinblick auf den Türdichtungswerkstoff. Außerdem ist die Möglichkeit einer montagebedingten Beschädigung der Türdichtung eliminiert.

Nach einer bevorzugten Ausführungsform des Gegenstandes der Erfindung ist vorgesehen, daß die Türdichtung und die Innenverkleidung an ihrer Anbindungsstelle formschlüssig miteinander verbunden sind.

Hierdurch ist es möglich, zwei verschiedene, den jeweiligen Anforderungen im besonderen Maße gerechtwerdende Werkstoffe vorzusehen, wobei insbesondere für die Türdichtung Kunststoffe zur Verfügung stehen, deren elastische Eigenschaften sich besonders für ein dichtes Anschmiegen der Türdichtung an den Öffnungsrand des Gefrierfach- oder Kältegerätegehäuses eignen.

Auf besonders einfache und sichere Weise ist die Türdichtung mit der Innenverkleidung formschlüssig verbunden, wenn nach einer nächsten vorteilhaften Ausgestaltung des Gegenstandes der Erfindung vorgesehen ist, daß die formschlüssige Verbindung an der Anbindungsstelle durch in Öffnungen an der Innenverkleidung eingreifende Vorsprünge an der Türdichtung erzeugt ist. Außerdem läßt sich eine derart befestigte Türdichtung auch im Recycling-Fall der Kältegeräte- oder Gefrierfachtür besonders leicht von deren Türkorpus trennen.

Entsprechend einer alternativen Ausführungsform des Gegenstandes der Erfindung ist vorgesehen, daß die Türdichtung und die Innenverkleidung an ihrer Anbindungsstelle stoffschlüssig miteinander verbunden sind.

Eine stoffschlüssige Verbindung der Innenverkleidung mit der Türdichtung setzt voraus, daß der für die Innenverkleidung zur Anwendung kommende, härtere Kunststoff und der für die Türdichtung zum Einsatz kommende, weichere Kunststoff zur Erreichung eines dauerhaften Verbundes zwischen beiden Bauteilen, identische Grundstoffe enthalten müssen, wodurch sich ein besonders einfacher Recyclevorgang der mit der Türdichtung ausgestatteten Gefrierfach- oder Kältegerätetür ergibt.

Mit besonders geringem Kraftaufwand verformbar ist die Türdichtung zur Erzeugung einer dichtenden Anlage am Öffnungsrand eines Kältegeräte- oder Gefrierfachgehäuses, wenn nach einer weiteren, bevorzugten Ausführung des Gegenstandes der Erfindung vorgesehen ist, daß die Türdichtung in entspannter Position einen zumindest annähernd hakenähnlichen Querschnitt aufweist, wobei zumindest das freie Hakenende bei in Schließzustand befindlicher Tür am Rand der Innenverkleidung anliegt. Durch eine derartige Anlage ist zwischen der Anlagestelle und der Anbindung der Türdichtung an die Innenverkleidung ein die Wärmeisolationswirkung im Dichtungsbereich günstig beeinflussendes Luftpolster gebildet.

Eine weitere Verbesserung der Isolationswirkung im Dichtungsbereich ist erzielt, wenn nach einer nächsten, bevorzugten Ausführungsform eines Gegenstandes der Erfindung vorgesehen ist, daß die mit hakenähnlichem Querschnitt versehene Türdichtung zwischen ihrem freien Hakenende und ihrem an der Tür festgesetzten Hakenende einen längs der Türdichtung verlaufenden Zwischensteg aufweist, welcher bei in Schließstellung befindlicher Tür zusammen mit dem freien Hakenende am Rand der Innenverkleidung aufliegt. Bei einer derartigen Türdichtung sind im Auflagezustand zwei parallel nebeneinander liegende, durch den Zwischensteg voneinander getrennte Luftkammern, zur Verbesserung der Wärmeisolationswirkung der Türdichtung im Dichtungsbereich erzeugt.

Die Erfindung ist in der nachfolgenden Beschreibung am Beispiel einer in der beigefügten Zeichnung vereinfacht in mehreren Ausführungsvarianten dargestellten Gefrierfachtür erläutert.

Es zeigen:
- Fig. 1: ausschnittsweise schematisch in Schnittdarstellung eine erste Ausführungsvariante einer Dreisterne-Gefrierfachtür im Bereich ihrer formschlüssig an der Innenverkleidung gehaltenen Türdichtung, in raumbildlicher Ansicht von vorne,
- Fig. 2: ausschnittsweise die Türdichtung gemäß der Fig. 1 im Bereich ihrer Verbindung mit der Innenverkleidung,
- Fig.3: ausschnittsweise schematisch in Schnittdarstellung eine zweite Ausführungsformvariante der Gefrierfachtür, im Bereich ihrer stoffschlüssig an ihrer Innenverkleidung gehaltenen Türdichtung, in raumbildlicher Ansicht von vorne,
- Fig. 4: ausschnittsweise die Türdichtung gemäß Fig. 3 im Bereich ihrer Verbindung mit der Innenverkleidung,
- Fig. 5: ausschnittsweise vereinfacht die Gefrierfachtür mit einer ersten, vorteilhaften Ausführungsform einer Türdichtung in raumbildlicher Ansicht von vorne,
- Fig. 6: ausschnittsweise vereinfacht die Gefrierfachtür mit einer zweiten, vorteilhaften Ausführungsform einer Türdichtung in raumbildlicher Ansicht von vorne.

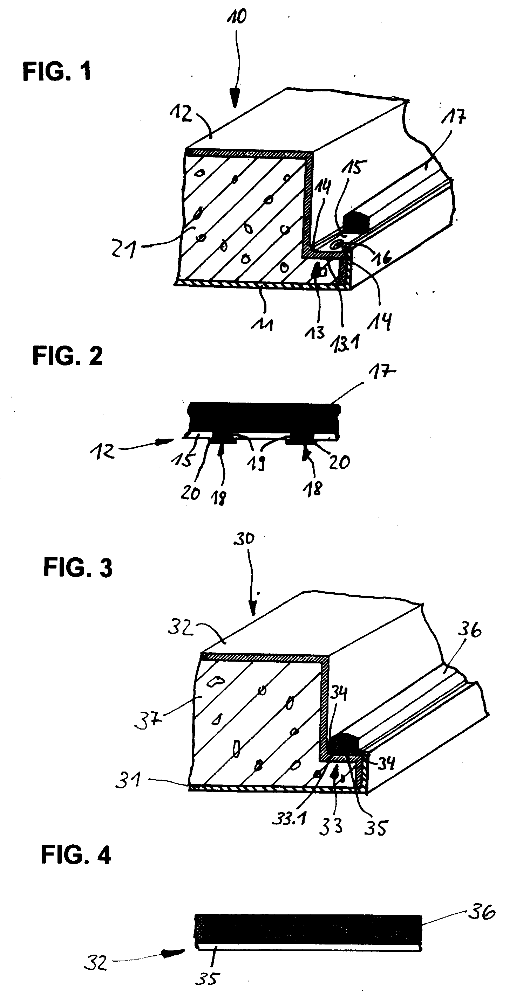

Gemäß Fig. 1 ist in vereinfachter schematischer Darstellung eine erste Ausführungsform einer Gefrierfachtür 10 gezeigt, welche eine als sogenannte Außentüre bezeichnete, durch spanlose Formgebung wie Tiefziehen oder Spritzgießen erzeugte Kunststoffaußenverkleidung 11 besitzt, welche eine nicht dargestellte Handhabe zum Betätigen der Gefrierfachtür 10 aufweist. Die Kunststoffaußenverkleidung 11 ist an ihren seitlichen Rändern mit den seitlichen Rändern einer ebenfalls spanlos aus Kunststoff gefertigten, als Innentüre dienenden Innenverkleidung 12 verbunden. Die Kunststoffinnenverkleidung 12 ist im Spntzguß-Verfahren hergestellt und weist einen umlaufenden, im Querschnitt winkelprofilartigen Randabschnitt 13 auf, der an einem seiner Winkelschenkel 13.1 U-profilartig ausgebildet ist und einen zwischen seine als seitliche Begrenzungswände 14 dienenden U-Profilschenkel liegenden, durch die Basis des U-Profils gebildeten Halteabschnitt 15 besitzt. Dieser ist umlaufend mit in Abständen zueinander angeordneten Durchbrüchen 16 ausgestattet, welche im vorliegenden Fall zur Verankerung einer in diesem Ausführungsbeispielen nur prinzipiell dargestellten Türdichtung 17 dienen. Die Türdichtung 17 ist zusammen mit der Innenverkleidung 12 im sogenannten Zweikomponenten-Spritzguß-Verfahren hergestellt, bei welchem nach dem Spritzvorgang der Innenverkleidung 12 die Türdichtung 13 innerhalb ein und desselben Spritzguß-Werkzeuges durch Spritzgießen mitangeformt wird. Zur Halterung der Türdichtung 17 an der Innenverkleidung 12 weist erstere, wie insbesondere Fig. 2 zeigt, hinterschnitten ausgebildete Haltezapfen 18 auf. Diese besitzen einen den Durchbruch 16 durchdringenden Zapfenkörper 19, an dessen freien Ende ein gegenüber dem Zapfenkörper 19 seitlich vorspringender und durch den Vorsprung den Hinterschnitt bildender Zapfenbund 20 vorgesehen ist, welcher an der Unterseite des Halteabschnitts 15 anliegt und gegenüber den Durchbrüchen 16 allseitig vorspringt, wodurch die Türdichtung 17 am Randabschnitt 13 gehaltert ist. Die durch die hinterschnittenen Haltezapfen 18 bewirkte, formschlüssige, durch das Zweikomponenten-Spritzgußverfahren bewirkte Halterung der Türdichtung 17 am Randabschnitt 13 läßt sich im Recycling-Fall durch ein Ausknöpfen der Haltezapfen 18 zumindest weitestgehend problemlos aufheben, so daß zwei reine Werkstoffkomponenten vorliegen. Zwischen der Innenverkleidung 12 und der Außenverkleidung 11 ist ein zum Zwecke der Wärmeisolation der Gefrierfachtür 11 dienender, mit Wärmeisolationsmaterial 21 verfüllter Zwischenraum vorgesehen.

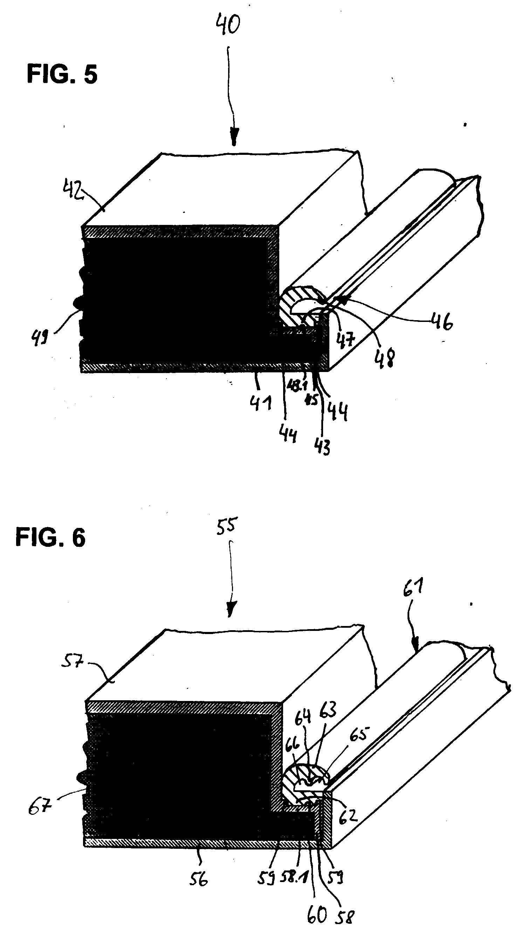

Gemäß Fig. 3 ist eine zweite Ausführungsform einer Gefrierfachtür 30 vereinfacht dargestellt, welche wie die Gefrierfachtür 10 eine spanlos aus Kunststoff gefertigte Außenverkleidung 31 besitzt, welche mit ihren freien Rändern mit den freien Rändern einer Kunststoff-Innenverkleidung 32 verbunden ist. Die Kunststoffinnen-Verkleidung 32 ist wie die Außenverkleidung 31 z.B. durch Spritzgießen hergestellt und besitzt einen winkelprofilartig ausgebildeten Randabschnitt 33 mit einem im Querschnitt im wesentlichen U-profilartig ausgebildeten Winkelschenkel 33.1, dessen U-Profil-Schenkel als seitliche Begrenzungswände 34 dienen, während seine Basis als Halteabschnitt 35 ausgebildet ist. Der Halteabschnitt 35 dient, wie auch Fig. 4 zeigt, zur Befestigung einer aus Kunststoff gefertigten, rein schematisch dargestellten Türdichtung 36, welche wie im Falle der Türdichtung 17 zusammen mit der Innenverkleidung 32 im sogenannten Zweikomponenten-Spritzgußverfahren in einem sowohl zur Herstellung der Innenverkleidung 32 als auch zur Herstellung der Türdichtung 36 dienenden Spritzgußwerkzeug erzeugt ist. Im Gegensatz zur Türdichtung 17 ist die Türdichtung 36 gemäß diesem Ausführungsbeispiel stoffschlüssig durch die Verwendung von zumindest im wesentlichen identischen Grundstoffen für die Innenverkleidung 32 und die Türdichtung 36 am Halteabschnitt 35 festgesetzt. Zwischen der Innenverkleidung 32 und der Außenverkleidung 31 ist zum Zwecke der Wärmeisolation der Gefrierfachtür 30 eine mit Wärmeisolations-Material 37 verfüllter Zwischenraum gebildet.

Zur Herstellung der Innenverkleidung 12 bzw.32 (als sogenannte Hartkomponente bezeichnet) haben sich beispielsweise Polyäthylen, Polyamid-6 (haftmodifiziert mit 25% Glasfaseranteil), Polyamid-6.6 (haftmodifiziert mit 25% Glasfaseranteil), Polyamid-6 (haftmodifiziert mit 40% Glasfaseranteil) sowie Polyamid-12 (haftmodifiziert mit 25% Glasfaseranteil) als günstig erwiesen. Für die Herstellung der Türdichtung 17 bzw. 36 in Verbindung mit den vorstehend genannten Hartkomponenten hat sich ein thermoplastischer Elastomer wie beispielsweise Thermolast K in Standardausführung mit Shorehärten > 20 < 40 Shore A bzw. in der modifizierten Ausführung mit Shorehärten > 30 < 70 Shore A als günstig erwiesen.

Fig. 5 zeigt eine weitere Gefrierfachtür 40 mit einer ersten vorteilhaften, weiter unten genauer erläuterten Ausführungsvariante einer Gefrierfachtürdichtung. Die Gefrierfachtür 40 besitzt eine spanlos geformte Kunststoffaußenverkleidung 41 und eine Kunststoffinnenverkleidung 42, welche an ihren freien Rändern mit den freien Rändern der Außenverkleidung 41 verbunden ist. Die Kunststoffinnenverkleidung 41 ist wie die Außenverkleidung z.B. im Spritzgußverfahren hergestellt und weist einen im Querschnitt winkelprofilartig ausgebildeten Randabschnitt 43 mit einem im Querschnitt U-profilartigen Winkelschenkel 43.1 auf, dessen U-Profilschenkel als seitliche Begrenzungs-Wände 44 dienen, während dessen U-Profil-Basis als Halteabschnitt 45 ausgebildet ist. Dieser dient zur Befestigung einer ebenfalls durch Kunststoffspritzgießen hergestellten, bereits eingangs erwähnten Türdichtung 46, welche zum Zwecke ihrer Befestigung an der Kunststoff-Innenverkleidung 42 mit einem wesentlichen flachprofilig ausgeführten Dichtungsfuß 47 versehen ist, welcher mit der im Rahmen des Zweikomponenten-Spritzgußverfahrens annähernd gleichzeitig hergestellten der Innenverkleidung 42 stoffschlüssig mit dem Halteabschnitt 45 verbunden ist. Mit dem Dichtungsfuß 47 ist einstückig ein hakenähnlich ausgebildeter Dichtungskopf 48 verbunden, dessen freies Ende im unbelasteten Zustand der Türdichtung 46 im Abstand zum Dichtungsfuß 47 angeordnet ist. Bei in Schließzustand befindlicher Gefrierfachtür 40, also im belasteten Zustand der Türdichtung 46, liegt das freie Hakenende zumindest weitestgehend am Dichtungsfuß 47 an, wodurch zwischen dem freien Ende des Dichtungskopfes 48 und dem am Dichtungsfuß 47 festgesetzten Ende des Dichtungskopfes 48 ein die Isolierwirkung der Dichtung verbessernder, ein Luftpolster aufnehmender Hohlraum erzeugt ist. Zur Wärmeisolierung der Gefrierfachtür 40 ist zwischen deren Außenverkleidung 41 und deren Innenverkleidung 42 Wärmeisolationsmaterial 49 vorgesehen.

Fig. 6 zeigt eine letzte Ausführungsform einer Gefrierfachtür 55, welche wie die anderen Gefrierfachtüren 10, 30 und 40 eine spanlos aus Kunststoff geformte Außenverkleidung 56 und eine ebenso spanlos aus Kunststoff gebildete Innenverkleidung 57 besitzt, welche mit ihren freien Rändern mit den freien Rändern der Außenverkleidung 56 verbunden ist. Die z.B. im Spritzgußverfahren hergestellte Innenverkleidung 57 weist in Randnähe einen im Querschnitt in Form eines Winkelprofils ausgebildeten Randabschnitt 58 mt einem im Querschnitt U-profilartigen Winkelschenkel 58.1 auf, dessen U-Profilschenkel als seitliche Begrenzungswände 59 dienen, während seine U-Profilbasis als Halteabschnitt 60 für eine weitere Ausführungsvariante einer Türdichtung 61 vorgesehen ist. Zum Zwecke ihrer Befestigung am Halteabschnitt 60 besitzt die Türdichtung 61 einen Dichtungsfuß 62, welcher stoffschlüssig mit Hilfe des Zweikomponenten-Spritzgußverfahrens, in dessen Rahmen unmittelbar nach der Erzeugung der Innenverkleidung 57 die Türdichtung 61 erzeugt ist, mit dem Halteabschnitt 60 verbunden ist. Mit dem Dichtungsfuß 62 ist einstückig ein Dichtungskopf 63 verbunden, welcher wie der Dichtungskopf 48 im unbelasteten Zustand im wesentlichen hakenförmig ausgebildet und mit seinem freien Ende vom Dichtungsfuß 47 beabstandet ist. Im Unterschied zum Dichtungskopf 48 weist der Dichtungskopf 63 zwischen seinem freien Ende und dem am Dichtungsfuß 62 angebundenen Ende einen längs des Türdichtungsprofiles verlaufenden Zwischensteg 64 auf, welcher im vorliegenden Ausführungsbeispiel in etwa mittig zwischen dem freien und dem an den Dichtungsfuß 62 angebundenen Ende des Dichtungskopfes 63 vorgesehen ist. Durch den Zwischensteg 64 sind bei in Schließstellung befindlicher Tür 55, in welcher das freie Ende des Dichtungskopfes 63 am Dichtungsfuß 62 anliegt, zwei zumindest annähernd parallel zueinander verlaufende Luftkammern 65 und 66 erzeugt, aufgrund derer die Kälteverluste aus dem Gefrierfach über die Türdichtung 61 deutlich herabgesetzt sind. Zur Isolierung der Gefrierfachtür 55 zwischen deren Außenverkleidung 56 und deren Innenverkleidung 57 Wärmeisolationsmaterial 67 vorgesehen.

Die am Beispiel der Gefrierfachtür beschriebene Ankopplung der Türdichtung an die Innenverkleidung ist in analoger Anwendung auch für eine Kältegerätetür, wie beispielsweise ein Kühlschrank- oder Gefrierschranktür möglich.

## Patentansprüche

1. Wärmeisolierende Tür für ein Kältegerät oder ein Gefrierfach oder dergleichen, mit einer Außenverkleidung, einer wärmeisolierenden Zwischenschicht und einer Innenverkleidung, an deren Rand eine Türdichtung vorgesehen ist, **dadurch gekennzeichnet,** daß die Türdichtung (17, 36, 46, 61) und die Innenverkleidung (12, 32, 42, 57) im Zweikomponenten-Spritzgußverfahren erzeugt sind, wobei die Türdichtung (17, 36, 46, 61) aus einem deren elastische Verformung ermöglichenden Werkstoff gefertigt ist.

2. Wärmeisolierende Tür nach Anspruch 1, dadurch gekennzeichnet, daß die Türdichtung (17) und die Innenverkleidung (12) an ihrer Anbindungsstelle formschlüssig miteinander verbunden sind.

3. Wärmeisolierende Tür nach Anspruch 2, **dadurch gekennzeichnet,** daß die formschlüssige Verbindung an der Anbindungsstelle durch in Öffnungen (16) an der Innenverkleidung (12) eingreifende Vorsprünge (18) an der Türdichtung (17) erzeugt ist.

4. Wärmeisoliernde Tür nach Anspruch 1 oder 2 **dadurch gekennzeichnet,** daß die Türdichtung (36, 46, 61) und die Innenverkleidung (32, 42, 57) an ihrer Anbindungsstelle stoffschlüssig miteinander verbunden sind.

5. Wärmeisolierende Tür nach einem der Ansprüche 1 - 4 **dadurch gekennzeichnet,** daß die Türdichtung (46, 61) in entspannter Position einen zumindest annähernd hakenähnlichen Querschnitt aufweist, wobei zumindest das freie Hakenende bei der in Schließstellung befindlicher Tür (40, 55) am Rand der Innenverkleidung(42, 57) anliegt.

6. Wärmeisolierende Tür nach Anspruch 5, **dadurch gekennzeichnet**, daß die mit dem hakenähnlichen Querschnitt versehene Türdichtung (61) zwischen ihrem freien Hakenende ihrem an der Tür (55) festgesetzten Hakenende einen längs der Türdichtung (61) verlaufenden Zwischensteg (64) aufweist, welcher bei in Schließstellung befindlicher Tür (55) zusammen mit dem freien Hakenende am Rand der Inneriverkleidung (57) aufliegt.
